(19) Europäisches Patentamt
European Patent Office
Office européen des brevets

(11) **EP 2 269 833 B1**

(12) **EUROPÄISCHE PATENTSCHRIFT**

(45) Veröffentlichungstag und Bekanntmachung des Hinweises auf die Patenterteilung:
**24.04.2013 Patentblatt 2013/17**

(51) Int Cl.:
**B41M 5/26** (2006.01)    **C08K 3/00** (2006.01)

(21) Anmeldenummer: **10178028.6**

(22) Anmeldetag: **15.10.2005**

(54) **Lasermarkierbare Formmassen und daraus erhältliche Produkte und Verfahren zur Lasermarkierung**

Laser-markable molding masses, products obtained therefrom and method for laser marking

Matières moulables marquables au laser, produits obtenus à partir de ces matières et procédé de marquage au laser

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **15.10.2004 DE 102004050557**

(43) Veröffentlichungstag der Anmeldung:
**05.01.2011 Patentblatt 2011/01**

(62) Dokumentnummer(n) der früheren Anmeldung(en) nach Art. 76 EPÜ:
**05797680.5 / 1 827 858**

(73) Patentinhaber: **Ticona GmbH**
**65451 Kelsterbach (DE)**

(72) Erfinder:
• **Clauss, Joachim**
 **64297 Darmstadt-Eberstadt (DE)**
• **Witan, Kurt**
 **65719 Hofheim (DE)**

• **Schneller, Arnold**
 **64342 Seeheim-Jungheim (DE)**
• **Kurz, Klaus**
 **65451 Kelsterbach (DE)**

(74) Vertreter: **Zimmermann & Partner**
**Postfach 330 920**
**80069 München (DE)**

(56) Entgegenhaltungen:
EP-A- 0 697 433    EP-A- 0 708 147
EP-A- 0 761 461    EP-A1- 0 669 365
EP-A2- 0 400 305    WO-A1-2005/047009
DE-A1- 19 538 247    DE-U1-202004 003 362

• DATABASE WPI Week 200528 Thomson Scientific, London, GB; AN 2005-272838 XP002608907 -& WO 2005/021244 A1 (ORIENT CHEM IND LTD) 10. März 2005 (2005-03-10) -& EP 1 658 953 A1 (ORIENT CHEMICAL IND [JP]) 24. Mai 2006 (2006-05-24)

## Beschreibung

Die vorliegende Erfindung betrifft neue Formmassen basierend auf teilkristallinen technischen Thermoplasten, die lasermarkierbare Formteile mit erhöhter Markierungsgüte ergeben. Weiterhin betrifft die Erfindung Formteile, die aus solchen lasermarkierbaren Formmassen hergestellt werden, ein Verfahren zur Lasermarkierung sowie die Verwendung ausgewählter Zusätze zur Lasermarkierung.

Teilkristalline Thermoplaste werden seit langem als Werkstoffe eingesetzt. Neben ihren mechanischen, thermischen, elektrischen und chemischen Eigenschaften gewinnen zunehmend Funktionalitäten wie die Markierbarkeit mit Laserlicht an Bedeutung. Beispielhaft sollen Anwendungen im Haushaltswarenbereich, bei Tastaturen und im Elektronikbereich genannt werden. Hier ist für die Anwendung ein hoher Kontrast zwischen der laserbeschriebenen Markierung und der Polymermatrix als Hintergrund gefordert. Weiterhin ist für die Ästhetik eine gezielte Einstellung der Markierungs- sowie Matrixfarbe sowie der Oberflächenbeschaffenheit der Markierung von Vorteil. Vor allem, wenn die lasermarkierten Oberflächen im Gebrauch üblicherweise sichtbar oder regelmäßig mechanischen oder chemischen Belastungen ausgesetzt sind, soll die Dauerhaftigkeit bei hoher Wertanmutung gewährleistet sein. Dies stellt in vielen Fällen eine Hürde für den Einsatz von teilkristallinen technischen Thermoplasten dar.

Lasermarkierbare Formmassen sind an sich bekannt. Eine Möglichkeit der Markierung dieser Formmassen mit Laserlicht besteht darin, den Kunststoff an ausgewählten Stellen mit Laserlicht zu bestrahlen und durch die eingebrachte Energie eine mechanische Veränderung oder eine lokale Verfärbung des Kunststoffes zu bewirken. Eine weitere Möglichkeit der Markierung dieser Formmassen mit Laserlicht besteht darin, verfärbbare Füllstoffe einzusetzen, die durch Einstrahlung von Laserlicht an ausgewählten Stellen ihre Farbe ändern.

Aus der EP-A-190,997 ist ein Verfahren zur Lasermarkierung von pigmentierten Systemen bekannt, bei dem in ein hochmolekulares Material ein eine Verfärbung verursachender und strahlungsempfindlicher Zusatzstoff eingearbeitet wird. Als Zusatzstoffe werden unter anderem $TiO_2$ und $Sb_2O_3$ offenbart.

Der Einsatz unterschiedlichster Zusatzstoffe in lasermarkierbaren Kunststoff-Formmassen wird in verschiedensten Patentdokumenten beschrieben.

So ist aus der EP-A-330,869 der Einsatz von $TiO_2$-Weisspigment bekannt. Die EP-A-400,305 und die EP-A-542,115 beschreiben die Verwendung von Kupferhydroxidphosphat bzw. von Molybdän-(IV)-oxid.

In der US-A-5,063,137 wird unter anderem die Verwendung von wasserfreien Metallphosphaten und Phosphorsäure-basierenden Gläsern offenbart.

Die EP-A-797,511 beschreibt den Einsatz von plättchenförmigen Pigmenten mit einer Schicht aus dotiertem Zinnoxid.

In der US-A-5,489,639 wird der Einsatz ausgewählter Kupfersalze (Phosphate, Sulfate, Thiocyanate) beschrieben.

Die EP-A-764,683 offenbart die Verwendung von Kupferpyrophosphat-Hydrat und/oder Mangansulfathydrat.

Aus der EP-A-808,866 ist der Einsatz von Borsäureanhydrid bekannt.

WO-A-98/58805 offenbart eine Reihe von Kupferphosphaten.

WO-A-99/55773 beschreibt unter anderem die Verwendung von Zinkhydroxystannat und Zinn(II)oxalat.

Aus der DE-A-199 05 358 ist die Verwendung von Alkalikupferdiphosphat bekannt.

WO-A-01/00719 beschreibt den Einsatz von $Sb_2O_3$ mit Teilchengrößen oberhalb von 0,5 $\mu$m.

Aus der EP-A-1,190,988 ist die Verwendung von bestimmten Wismut-Mischoxiden bekannt.

In der WO-A-01/78994 wird der Einsatz von Kupferfumarat, Kupfermaleat sowie deren Mischungen vorgeschlagen.

In der DE-A-100 53 639 wird die Verwendung ausgewählter Salze, unter anderem verschiedener Kobalt- und Eisenphosphate, vorgeschlagen.

Die DE-A-100 34 472 beschreibt die Verwendung von mit bestimmten Silizium-verbindungen oberflächenmodifizierten Teilchen.

In der EP-A-753,536 wird der Einsatz von mindestens zwei Arten von Metalloxiden beschrieben.

Die EP-A-105,451 beschreibt Polyphenylensulfid-Formmassen, die zur Lasermarkierung mit ausgewählten Zusätzen, beispielsweise mit der Kombination von Bleichromat und Bleimolybdat, mit Nickel-Antimon-Titanat oder mit Kobalt-Zink-Silizium modifiziert worden sind.

Die bislang verfügbaren lasermarkierbaren Kunststoff-Formmassen sind in mancherlei Hinsicht noch zu verbessern.

Zur Laserbeschriftbarkeit eingesetzte Pigmente ergeben häufig nur einen ungenügenden Farbunterschied zwischen der markierten Stelle und der unbelichteten Kunststoffmatrix und damit einen schlechten Farbkontrast und eine schlechte Lesbarkeit der Beschriftung. In anderen Fällen verändert sich der anfangs akzeptable Farbkontrast mit der Zeit, so dass die Beschriftung mehr oder weniger verschwindet. Bei Zusatz von zunehmenden Pigmentmengen besteht außerdem die Gefahr einer unerwünschten Veränderung der Kunststoffeigenschaften.

Wird als lasersensitives Additiv ein lichtstreuendes Teilchen eingesetzt, das als Weißpigment wirkt, so ist dieser Ansatz dadurch limitiert, daß mit zunehmendem Gehalt an Additiv zwar die Lichtempfindlichkeit zunimmt aber sowohl der Markierungskontrast als auch die Eindringtiefe der Markierung zurückgehen kann.

Wird eine Metallverbindung (z.B. Oxid oder Salz) eingesetzt, so trägt in der Regel die jeweilige Eigenfarbe zur Verfärbung der Matrix bei und ist im allgemeinen der Ästhetik abträglich.

Ausgehend von dem oben genannten Stand der Technik liegt der vorliegenden Erfindung die Aufgabe zugrunde, Formmassen basierend auf teilkristallinen technischen Thermoplasten bereitzustellen, die mit üblichen Lasern markiert werden können, und bei denen mit gutem Markierungskontrast die Farbe der Matrix, die Farbe der Markierung sowie die Oberflächentopologie der Markierung optimiert werden können, ohne daß dabei das übrige Eigenschaftsprofil der technischen Thermoplasten unangemessen leidet.

Überraschend wurden nun Formmassen gefunden, bei denen die beschriebenen Nachteile ausreichend vermieden werden können.

Die vorliegende Erfindung betrifft lasermarkierbare Formmassen enthaltend

A) mindestens einen teilkristallinen Thermoplasten und

B) mindestens eine partikuläre lichtsensitive salzartige Verbindung, die unter dem Einfluß von Laserlicht ihre Farbe ändert oder zu einer Farbänderung in der Kunststoffmasse führt und die mehrere Kationen enthält, von denen eines ausgewählt wird aus der Gruppe bestehend aus Ti, Cr, Mn, Fe, Co, Ni, Cu, Zn, Y, Zr, Nb, Mo, Ag, Sn, Sb, La, Pr, Ta, W, Ce und von denen ein weiteres ausgewählt wird aus der Gruppe bestehend aus Elementen der 3.-6. Periode der II. und III. Hauptgruppe, der 5.-6. Periode der IV. Hauptgruppe sowie der 4.-5. Periode der III.-VIII. Nebengruppe und der Lanthaniden, und

C) mindestens ein partikuläres anorganisches Oxid mit einem mittleren Teilchendurchmesser von weniger als 250 nm, vorzugsweise von weniger als 200 nm, und

D) gegebenenfalls weitere übliche Additive.

Erfindungsgemäß werden als Komponente B) partikuläre lichtsensitive salzartige Verbindungen oder Mischungen eingesetzt, die mehrere Kationen enthalten. Die Kationen werden im Einzelfall so ausgewählt, dass die salzartige Verbindung B) beim Einmischen in die Komponente A) die Farbe der Formmasse nicht oder in einer gewünschten Weise ändert. Ferner werden die Massenverhältnisse der Kationen zueinander so gewählt, dass sich nach der Bestrahlung der Formmasse an den bestrahlten Stellen zwar deren Helligkeit nicht aber die Farbe der Matrix ändert.

Die mittlere Teilchengröße ($d_{50}$) der Komponente B ist bevorzugt kleiner als 10 $\mu$m. Geeignete Primärteilchen können von wenigen Nanometern bis hin zu einigen Mikrometern groß sein.

Komponente B muss mindestens zwei unterschiedliche Kationen aus den oben beschriebenen Gruppen enthalten. Gegebenenfalls können weitere Kationen z.B. aus Elementen der 2.-5. Periode der I. Hauptgruppe enthalten sein.

Erfindungsgemäß werden als Komponente C) partikuläre Additive eingesetzt, die einerseits die Laserlichtempfindlichkeit der Formmasse erhöhen aber andererseits Licht kaum streuen. Anorganische Oxide, die zwar einen von der Matrix unterschiedlichen Brechungsindex aufweisen jedoch Primärteilchen mit einem mittleren Durchmesser ($d_{50}$) unterhalb der Lichtwellenlänge enthalten, erfüllen in der Regel dieses Kriterium.

Die Rezepturkomponenten der erfindungsgemäßen Formmasse sind daher die Matrix (A) enthaltend teilkristalline technische Thermoplaste, sowie die Zusätze (B) in Form von partikulären lichtsensitiven Verbindungen oder Mischungen mit der oben definierten Kombination von Kationen und/oder Zusätze (C) in Form von nanopartikulären anorganischen Oxiden, sowie gegebenenfalls weitere übliche Additiven (D).

Überraschenderweise ergänzen sich beide Typen von partikulären Zusätzen in nicht trivialer Weise. Sowohl Komponente B als auch Komponente C erhöhen im Wechselspiel mit der Matrix A die Laserlichtempfindlichkeit.

Die Komponente B beeinflußt gegebenenfalls mit weiteren farbgebenden Additiven oder Pigmenten die Eigenfarbe der Matrix sowie die Farbe der Markierung.

Bei geeigneter Wahl von Komponente C bleibt deren Einfluß auf die Farbausprägung von Matrix und Markierung gering.

Laserbeschriftbare Formmassen im Sinne dieser Anmeldung zeichnen sich dadurch aus, daß bei Einstrahlung von intensivem Licht, bevorzugt aus einer üblichen Laserlichtquelle an der belichteten Stelle eine Farbänderung im Vergleich zur nicht belichteten Matrix auftritt. Dieser Farbunterschied kann als lokal unterschiedliche Leuchtdichte, als lokal unterschiedliche Farbwerte z.B. im CIELab-System oder als lokal unterschiedliche Farbwerte im RGB System erfaßt werden. Diese Effekte können bei unterschiedlichen Lichtquellen auftreten.

Die Auswahl der Komponenten B) und/oder C) erfolgt in der Regel so, daß diese im Wellenlängenbereich des zur Verfügung stehenden Laserlichtes eine möglichst starke Absorption aufweisen.

Die Wellenlängenbereiche des eingesetzten Laserlichtes sind grundsätzlich keinen Beschränkungen unterworfen. Geeignete Laser haben im allgemeinen eine Wellenlänge im Bereich von 157 nm bis 10,6 $\mu$m, vorzugsweise im Bereich von 532 nm bis 10,6 $\mu$m.

Beispielsweise seien hier $CO_2$-Laser (10,6 $\mu$m) und Nd:YAG-Laser (1064 nm) oder gepulste UV-Laser erwähnt.

Typische Excimerlaser weisen folgende Wellenlängen auf: $F_2$-Excimerlaser (157 nm), ArF-Excimerlaser(193 nm), KrCl-Excimerlaser (222 nm), KrF-Excimerlaser (248 nm), XeCl-Excimer-laser (308 nm), XeF-Excimerlaser (351 nm), frequenzvervielfachte Nd:YAG-Laser mit Wellenlängen von 532 nm (frequenzverdoppelt) von 355 nm (frequenzverdreifacht) oder 265 nm (frequenzvervierfacht).

Besonders bevorzugt werden Nd:YAG-Laser (1064 bzw. 532 nm) und $CO_2$-Laser eingesetzt.

Die Energiedichten der erfindungsgemäß eingesetzten Laser liegen im allgemeinen im Bereich von 0,3 mJ/cm$^2$ bis 50 J/cm$^2$, vorzugsweise 0,3 mJ/cm$^2$ bis 10 J/cm$^2$. Bei der Verwendung von gepulsten Lasern liegt die Pulsfrequenz im allgemeinen im Bereich von 1 bis 30 kHz.

Typischerweise enthält die erfindungsgemäße Formmasse 50 bis 99,95 Gew.-%, bevorzugt 80 bis 99,5 Gew.-%, besonders bevorzugt 95 - 99 Gew.-% an Matrixkomponente (A), die einen oder mehrere der technischen teilkristallinen Thermoplasten enthält. Da die Matrix definitionsgemäß teilkristallin und damit bei sich im Brechungsindex unterscheidenden Domänen nicht transparent ist, tragen vor allem oberflächennahe Komponenten zur Lasermarkierung bei.

Nicht nur Polymere mit linearen Kettenmolekülen, auch verzweigte oder leicht vernetzte Polymere können in der Matrix eingesetzt werden. Die Polymerisationsgrade der erfindungsgemäß einsetzbaren teilkristallinen Thermoplasten sind nicht besonders eingeschränkt und liegen in der gleichen Größenordnung wie die vergleichbarer nicht-lichtbeschriftbarer Formmassen.

Die erfindungsgemäß eingesetzte Matrixkomponente (A) muß teilkristallin sein, d.h. die in Frage kommenden Thermoplasten zeigen im DSC-Diagramm einen Schmelzbereich.

Die erfindungsgemäß eingesetzte Matrixkomponente (A) ist keinen besonderen Beschränkungen unterworfen, solange es sich um ein thermoplastisches und teilkristallines Polymeres handelt.

Beispiele für bevorzugt einsetzbare teilkristalline Thermoplasten (A) sind Polyacetale (A1), Polyester (A2), Polyamide (A3), Polyarylenether und Polyarylensulfide (A4), Polyethersulfone und Polysulfone (A5), Polyaryletherketone (A6), Polyolefine (A7), flüssig-kristalline Polymere (A8) sowie gegebenenfalls weitere thermoplastische Polymere als Blendpartner (AX).

Polyacetale (A1) im Sinne dieser Beschreibung sind Polymere, die als Hauptwiederholheit Oxymethylen-Gruppen ($CH_2O$-) aufweisen. Sie umfassen hierbei Polyoxymethylen-Homopolymere, -Copolymere, - Terpolymere und -Blockcopolymere.

Polyester (A2) im Sinne dieser Beschreibung sind thermoplastische Polymere mit sich wiederholenden Estergruppen in der Hauptkette. Beispiele sind Polykondensationsprodukte der Naphthalindicarbonsäuren, Terephthalsäure, Isophthalsäure, Adipinsäure, Azelainsäure, Sebacinsäure, Dodecandisäure, Cyclohexandicarbonsäuren, Mischungen dieser Carbonsäuren und esterbildenden Derivate mit zweiwertigen Alkoholen wie Ethylenglykol, 1,3-Propandiol, 1,4-Butandiol, 1,4-Butendiol und 1,6-Hexandiol, 1,4-Hexandiol, 1,4-Cyclohexandiol, 1,4-Di-(hydroxymethyl)cyclohexan, Bisphenol A, Neopentylglykol, Oligo- oder Polyethylenglykolen, Oligo- oder Polypropylenglykolen, Oligo- oder Poly(tetramethylen)glykolen, Mischungen dieser Diole sowie esterbildenden Derivate derselben sowie mit weiteren möglichen AA-, BB- und AB-Comonomeren.

Besonders bevorzugte Matrixkomponenten (A) sind Polyethylenterephthalat, Polybutylenterephthalat und Polyetheresterblockcopolymere.

Polyamide (A3) im Sinne dieser Beschreibung sind thermoplastische Polymere mit sich wiederholenden Säureamidgruppen in der Hauptkette. Sie umfassen sowohl Homopolymere des Amincarbonsäuretyps als auch des Diamin-Dicarbonsäuretyps als auch Copolymere mit weiteren möglichen AA-, BB- und AB-Comonomeren. Die verwendbaren Polyamide sind bekannt und zum Beispiel in der Encyclopedia of Polymer Science and Engineering, Vol. 11, S. 315 bis 489, John Wiley & Sons, Inc. 1988 beschrieben.

Beispiele für Polyamide (A3) sind Polyhexamethylenadipinsäureamid, Polyhexamethylenazelainsäureamid, Polyhexamethylensebacinsäureamid, Polyhexamethylendodekandisäureamid, Poly-11-aminoundekansäureamid und Bis-(p-amino-cyclohexyl)-methandodekansäurediamid oder die durch Ringöffnung von Lactamen, z.B. Polycaprolactam oder Polylaurinlactam erhaltenen Produkte. Auch Polyamide auf der Basis von Terephthal- oder Isophthalsäure als Säurekomponente und/oder Trimethylhexamethylendiamin oder Bis-(p-aminocyclohexyl)-propan als Diaminkomponente sowie Polyamidgrundharze, die durch Copolymerisation zweier oder mehrerer der vorgenannten Polymeren oder deren Komponenten hergestellt worden sind, sind geeignet. Als Beispiel hierfür sei ein Copolykondensat aus Terephthalsäure, Isophthalsäure, Hexamethylendiamin und Caprolactam genannt.

Polyarylensulfide (A4) im Sinne dieser Beschreibung sind thermoplastische Polymere mit sich wiederholenden Schwefelgruppen in der weitgehend aromatischen Hauptkette. Sie umfassen sowohl Homopolymere als auch Copolymere.

Flüssig-kristalline Polymere (A8) im Sinne dieser Beschreibung sind insbesondere auf p-Hydroxybenzoesäure und/oder 6-Hydroxy-2-naphthoesäure basierende flüssigkristalline Copolyester und Copolyesteramide. Ganz besonders vorteilhaft als flüssigkristalline Kunststoffe einzusetzen sind im allgemeinen vollaromatische Polyester, die anisotrope Schmelzen bilden und mittlere Molekulargewichte (Mw=Gewichtsmittel) von 2.000 bis 200.000, bevorzugt von 3.500 bis 50.000 und insbesondere von 4.000 bis 30.000 g/mol aufweisen. Besonders geeignete flüssig-kristalline Polymere sind zum Beispiel in Saechtling, Kunststoff-Taschenbuch, Hanser-Verlag, 27. Ausgabe, auf den Seiten 517 bis 521 beschrieben.

Thermoplastische Polymere als Blendpartner (AX) im Sinne dieser Beschreibung können beliebige weitere teilkristalline, flüssigkristalline und amorphe Polymere sein.

Lichtsensitive Verbindungen (B) im Sinne dieser Beschreibung sind organische oder anorganische salzartige Verbindungen mit den oben definierten Kombinationen unterschiedlicher Kationen oder Mischungen aus salzartigen Verbindungen mit den oben definierten Kombinationen unterschiedlicher Kationen, die unter dem Einfluß einer Laserlichtquelle an der belichteten Stelle ihre Farbe ändern bzw. zu einer Farbänderung im Kunststoff führen.

Die Verbindungen (B) können klassische Salze mit definierter Stöchiometrie aus einem oder mehreren Anionen mit mehreren, mindestens jedoch zwei von unterschiedlichen Elementen abgeleitete Kationen sein, es kann sich aber auch um nicht stöchiometrisch zusammengesetzte Verbindungen handeln, die mindestens zwei von unterschiedlichen Elementen abgeleitete Kationen aufweisen.

Bei einem gegebenem System von Anionen ist das Auftreten einer Ionenaustauscherfunktionalität ein möglicher Nachweis, daß sich solch komplexe Strukturen unter Einbindung mehrerer unterschiedlicher Kationen ausbilden.

In einer möglichen Ausführungsform der Erfindung wird ein Gemisch an Verbindungen mit jeweils einem Kation eingesetzt, das beim Erwärmen zu wenigstens einer Verbindung mit zwei Kationen umsetzbar ist.

Die obige Definition des Erfindungsgedankens schließt unter anderem folgende Ausführungsformen ein, die alternativ oder in Kombination miteinander verwendet werden können. Die eine Ausführungsform besagt, dass die für die erfindungsgemäße Formmasse eingesetzten Additive als solche wenigstens zwei verschiedene Kationen besitzen, beispielsweise durch Umsetzung wenigstens zweier einfacher Salze (mit jeweils einem Kation) entstanden sind und als Mischsalze (B) in der Polymermatrix (A) die erfindungsgemäße Formmasse darstellen. Die andere Ausführungsform bedient sich der gleichen Auswahl an Kationen wie die erste Ausführungsform, besteht aber aus einem noch nicht miteinander umgesetzten Gemisch einfacher Salze. Diese Ausführungsform ist möglich, wenn bei erhöhten Temperaturen und sonstigen üblichen Bedingungen (z.B. Restfeuchte) die in der Mischung vorliegenden Salze zu Mischsalzen, also neuen Umsetzungsprodukten (B) reagieren, und somit die erfindungsgemäße Formmasse zugänglich wird.

Bei der letzteren Ausführungsform sind wiederum mehrere Varianten möglich. Die in dem Gemisch enthaltenen einfachen salzartigen Verbindungen können vor der Zugabe zu der Kunststoffmatrix (A) miteinander umgesetzt werden, um eine salzartige Verbindung mit Kationen nach den erfindungsgemäßen Auswahlregeln zu bilden, worauf das Umsetzungsprodukt als Additiv (B) für die erfindungsgemäße Formmasse benutzt werden kann. In einer weiteren Ausführungsform wird das Gemisch der einfachen Salze zu der laserbeschriftbar zu machenden Kunststoffmatrix (A) gemischt. Anschließend reagieren beim Erhitzen der Grundmasse die einfachen salzartigen Verbindungen miteinander und ergeben gleiche oder ähnliche Mehrfachsalze, die denen im ersten Teil dieses Beispiels gleichen oder wenigstens ähneln.

Elemente, deren Kationen sich zu lichtinduzierten Farbänderungen nutzen lassen, sind Ti, Cr, Mn, Fe, Co, Ni, Cu, Zn, Y, Zr, Nb, Mo, Ag, Sn, Sb, La, Pr, Ta, W und Ce.

Elemente, deren Kationen die genannten ergänzen, sind die 3.-6. Periode der II. und III. Hauptgruppe, 5.-6. Periode der IV. Hauptgruppe sowie die 4.-5. Periode der III.-VIII. Nebengruppe und der Lanthaniden.

Gegebenenfalls können noch als dritte Komponente Kationen aus der 2.-5. Periode der I. Hauptgruppe vorhanden sein.

Die Anionen der Komponente (B) unterliegen grundsätzlich keinen Beschränkungen, solange damit der Aufbau von Verbindungen mit Kationen von mindesten zwei unterschiedlichen Elementen möglich ist.

Bevorzugt werden in Komponente (B) Anionen eingesetzt, die mindestens zwei unterschiedliche Elemente enthalten.

Besonders bevorzugte Komponenten (B) weisen als Anionen Oxoanionen des Periodensystems auf sowie die Anionen der organischen Carbonsäuren sowie der Kohlensäure, sofern sich mit ihnen Mischverbindungen mit mehreren Kationen realisieren lassen. Besonders bevorzugte Komponenten (B) weisen als Anionen phosphorhaltige Oxoanionen auf.

Bevorzugt sind solche Kombinationen, bei denen die unbelichtete Verbindung (B) im Bereich der verwendeten Lichtwellenlänge absorbiert.

Bevorzugt sind weiterhin solche Kombinationen, bei denen durch Variation der Molverhältnisse der Kationen die Eigenfarbe der unbelichteten Verbindung (B) eingestellt werden kann.

In einer Ausprägung der Erfindung weist die unbelichtete Formmasse eine beliebige Eigenfarbe und die belichtete Formmasse einen möglichst deutlichen farblichen Unterschied dazu auf. Wenn hier von einem farblichen Unterschied die Rede ist, kann dies ein Umschlagen von einem Farbton in einen anderen, wie beispielsweise von Gelb nach Rot, bedeuten. Im Sinne der Erfindung soll unter diesem Begriff aber auch eine Helligkeitsänderung, beispielsweise von weiss nach grau, von grau nach schwarz oder von hellbraun nach dunkelbraun, verstanden werden. Auch eine Änderung der Opazität, beispielsweise von transparent nach weiss oder schwarz oder braun, soll als farblicher Unterschied verstanden werden.

Der farbliche Unterschied kann vom menschlichen Auge wahrgenommen werden. Ebenfalls erfindungsgemäß sollen farbliche Unterschiede sein, so sie von optischen Messgeräten erfasst werden oder bei einer Wellenlänge außerhalb des Empfindlichkeitsbereiches des menschlichen Auges mittels eines Detektors wahrgenommen werden. Als Beispiel hierzu sei die Verwendung von Lesegeräten genannt, die Dioden-Laser im NIR-Bereich verwenden.

Für den Bereich des sichtbaren Lichtes bietet sich zur Beschreibung des farblichen Unterschiedes das CIELab-System an. Hier bedeutet ein hoher Farbkontrast das Auftreten eines hohen Wertes für dE*, wobei

$$dE* = \sqrt[2]{(L*_1 - L*_2)^2 + (a*_1 - a*_2)^2 + (b*_1 - b*_2)^2}$$

bedeutet; dabei steht Index 1 für die unbelichtete, Index 2 für die belichtete Formmasse.

Bei dem CIELab-System handelt es sich um ein von der Internationalen Beleuchtungskomission (Commission Internationale d'Eclairage) 1976 festgelegten Farbraum, wobei L* = Helligkeit, a* = Rot-Grün-Farbinformation, und b* = Gelb-Blau-Information bedeuten.

In einer bevorzugten Ausprägung der Erfindung weist die unbelichtete Formmasse eine möglichste hohe Helligkeit (also einen möglichst hohen Helligkeitswert L* im CIELab-Farbraum) und eine möglichst geringe Eigenfarbe (also eine möglichst geringe Abweichung von der schwarz-weiss-Achse: betragsmäßig möglichst geringes a*, betragsmäßig möglichst geringes b*) auf. In diesem Fall soll die belichtete Formmasse eine möglichste geringe Helligkeit (möglichst niedriger Helligkeitswert L*) und dennoch eine möglichst geringe Eigenfarbe (betragsmäßig möglichst geringes a*, betragsmäßig möglichst geringes b*) aufweisen.

In einer anderen bevorzugten Ausprägung der Erfindung weist die unbelichtete Formmasse eine möglichste hohe Helligkeit (möglichst hoher Helligkeitswert L* im CIELab-Farbraum) und eine möglichst geringe Eigenfarbe (möglichst geringe Abweichung von der schwarz-weiss-Achse: betragsmäßig möglichst geringes a*, betragsmäßig möglichst geringes b*) auf. In diesem Fall soll die belichtete Formmasse eine möglichst deutliche Eigenfarbe (betragsmäßig möglichst hohes a* und/oder b*) aufweisen.

In einer bevorzugten Ausführungsform der erfindungsgemäßen Zusammensetzung weisen die Anionen der Komponente (B) die allgemeine Formel $A_aO_o(OH)_y^{z-}$ auf, worin

A = drei- oder fünfwertiger Phosphor, vierwertiges Molybdän oder sechswertiges Wolfram bedeuten,

a, o und z unabhängig voneinander ganze Zahlen mit Werten von 1-20 bedeuten, und

y eine ganze Zahl mit Werten zwischen 0 und 10 ist.

In einer weiteren bevorzugten Ausführungsform der erfindungsgemäßen Zusammensetzung weist die Komponente (B) mindestens eine Kombination aus zwei unterschiedlichen Elementen der Gruppe bestehend aus Kupfer, Zinn, Antimon und Eisen auf.

In einer besonders bevorzugten Ausführungsform der erfindungsgemäßen Zusammensetzung weist die Komponente (B) Anionen der Phosphor(V)- und/oder Phosphor(III)-säure, deren Kondensationsprodukte und gegebenenfalls weitere Hydroxidionen auf und als Kationen Cu und Fe oder Cu und Sn oder Cu und Sb oder Sn und Fe.

Neben der chemischen Zusammensetzung haben auch physikalische Parameter wie die Teilchengröße der Komponente (B) einen maßgeblichen Einfluß auf die Güte der Laserbeschriftbarkeit. Sie beeinflussen durch ihr Streuverhalten sowohl die Farb- und Helligkeitswerte der unbelichteten Matrix als auch die optische Einheitlichkeit im belichteten und unbelichteten Bereich. Weiterhin ist die mittlere Teilchengröße ein wichtiges Maß für die Dispergierbarkeit in der Polymermatrix und beeinflußt hierdurch auch die Lichtempfindlichkeit der Formmasse.

Als geeignet erweisen sich Komponenten (B) mit einem mittleren Teilchendurchmesser von weniger als 10 $\mu$m. Bevorzugt weist Komponente (B) einen mittleren Teilchendurchmesser unter 5 $\mu$m auf.

Quantitative Angaben zur Teilchengröße beziehen sich in dieser Anmeldung durchgehend auf die mittlere Teilchengröße ($d_{50}$) und auf die Teilchengröße der Primärteilchen. Der Teilchendurchmesser wird für die Zwecke dieser Erfindung bestimmt durch übliche Methoden wie Lichtstreuung (ggf. mit polarisiertem Licht), Mikroskopie bzw. Elektronenmikroskopie, zählende Flussmessungen an dünnen Spalten, Sedimentationsverfahren oder weiteren kommerziell erhältlichen Verfahren.

Die Komponenten B) werden vorteilhaft in Anteilen von 0,01 bis 2,0 Gew.-% eingesetzt. Besonders bevorzugt sind Gehalte von 0,02 bis 1,0 Gew.-%.

Lichtsensibilisierende anorganische Oxide (C) im Sinne dieser Beschreibung sind Oxide, die unter dem Einfluß der Lichtstrahlung die Bildung farbgebender Verbindungen fördern. Dies kann zum einen eine Änderung ihrer Eigenfarbe dieser Oxide sein oder aber ein katalytischer Beitrag, daß entsprechend absorbierende Verbindungen in ihrer räumlichen Nachbarschaft gebildet werden.

Unter dem Begriff Oxide sind im Rahmen dieser Beschreibung auch Verbindungen zu verstehen, bei denen ein Teil der Sauerstoffatome in der Form von Hydroxylgruppen vorliegt. Auch in diesem Falle kann es sich um stöchiometrisch und um nicht-stöchiometrisch zusammengesetzte Verbindungen handeln.

Geeignete anorganische Oxide der Komponente (C) können auf Elementen der 3.-6. Periode der III. und IV.

Hauptgruppe, 5.-6. Periode der V. Hauptgruppe sowie die 4.-5. Periode der III.-VIII. Nebengruppe und der Lanthaniden basieren.

Bevorzugt eingesetzte Oxide (C) sind $Al_2O_3$, $SiO_2$ silikatische sowie alumosilikatische Mineralien, silikatische Gläser, $TiO_2$ ZnO, $ZrO_2$, $SnO_2$, $Sb_2O_3$, $Sb_2O_5$, $Bi_2O_3$ sowie ggf. Mischoxide mit weiteren dotierenden Elementen. Besonders bevorzugt ist $TiO_2$ in Anatas- und Rutilform.

Neben der chemischen Zusammensetzung haben auch physikalische Parameter wie die Teilchengröße der Komponente (C) einen maßgeblichen Einfluß auf die Güte der Laserbeschriftbarkeit. Wirkt das oxidische Additiv durch sein Streuverhalten als permanentes Weisspigment werden die Helligkeitswerte der unbelichteten wie belichteten Stellen erhöht und damit der Markierungskontrast limitiert. Weiterhin ist die mittlere Teilchengröße ein wichtiges Maß für die maximale Teilchen-Matrix-Grenzfläche, die bei guter Dispergierung zu erzielen ist und beeinflußt hierdurch auch die Lichtempfindlichkeit der Formmasse.

Als geeignet herausgestellt haben sich Komponenten (C) mit einem mittleren Teilchendurchmesser von weniger als 250 nm. Der Teilchendurchmesser wird für die Zwecke dieser Erfindung z.B. durch Elektronen- oder Röntgenstrahlmethoden bestimmt. Bevorzugt weist Komponente (C) einen mittleren Teilchendurchmesser kleiner gleich 200, insbesondere kleiner gleich 100 nm, besonders bevorzugt von 10 bis 100 nm auf. Die angegebenen Teilchengrößen beziehen sich auf die verwendeten Primärteilchen des Additivs. Je nach Qualität der Dispersion können sich in der Matrix Agglomerate dieser Primärteilchen bilden, die naturgemäß größere Durchmesser aufweisen können.

Die Komponenten C) werden vorteilhaft in Anteilen von 0,01 bis 2,0 Gew.-% eingesetzt. Besonders bevorzugt sind Gehalte von 0,02 bis 1,0 Gew.-%.

Ein optionaler Bestandteil der erfindungsgemäßen thermoplastischen Formmassen sind weitere übliche Additive (D).

Dazu zählen beispielsweise Stabilisatoren zur Verbesserung der Beständigkeit gegen Lichteinwirkung, UV-Strahlung und Bewitterung (D1), Stabilisatoren zur Verbesserung der thermischen und thermooxidativen Beständigkeit (D2), Stabilisatoren zur Verbesserung der hydrolytischen Beständigkeit (D3), Stabilisatoren zur Verbesserung der acidolytischen Beständigkeit (D4), Gleitmittel (D5), Entformungshilfen (D6), farbgebende Additive (D7), kristallisationsregulierende Substanzen und Nukleierungsmittel (D8), Flammschutzmittel (D9), Schlagzähmodifier (D10), Füllstoffe (D11), Weichmacher (D12) und ggf. weitere übliche Additive (D13).

Als Stabilisatoren bei Bewitterung und Licht und UV-Strahlung (D1) kann die erfindungsgemäße Formmasse eine oder mehrere Substanzen aus der Gruppe von (D1A) Benzotriazol-Derivaten, (D1B) Benzophenon-Derivaten, (D1C) Oxanilid-Derivaten, (D1D) aromatischen Benzoaten, wie Salicylaten, (D1E) Cyanacrylaten, (D1F) Resorcin-Derivaten und (D1G) sterisch gehinderten Aminen enthalten.

In einer bevorzugten Ausführungsform enthält die erfindungsgemäße Formmasse sowohl mindestens eines der Stabilisatoren der Gruppe (D1A) bis (D1F) als auch sterisch gehinderte Amine der Gruppe D1G.

In einer besonders bevorzugten Ausführungsform enthält die erfindungsgemäße Formmasse ein Benzotriazol-Derivat D1A zusammen mit einem gehinderten Amin (D1G).

Beispiele für (D1A) Benzotriazol-Derivate sind 2-[2'-Hydroxy-3',5'-bis(1,1-dimethylbenzyl)phenyl]-b enzotriazo), 2-[2'-Hydroxy-3'-tert.-butyl-5'-methylphenyl)-5-chlorobenzotriazol, 2-(2'-Hydroxy-5'-methylphenzyl)-benzotriazol.

Beispiele für Benzophenonderivate (D1B) sind 2-Hydroxy-4-n-octoxybenzophenon und 2-Hydroxy-4-n-dodecyloxybenzophenon.

Beispiele für sterische gehinderte Amine (D1G) sind 2,2,6,6-Tetramethyl-4-piperidyl-Verbindungen, wie zum Beispiel Bis-(2,2,6,6-tetramethyl-4-piperidyl)-sebazat oder das Polymer aus Bernsteinsäuredimethylester und 1-(2-Hydroxyethyl)-4-hydroxy-2,2,6,6-tetramethyl-4-piperidin.

Die genannten Bewitterungsstabilisatoren (D1) werden vorteilhaft in Anteilen von 0,01 bis 2,0 Gew.-% eingesetzt. Besonders bevorzugt sind Gehalte von 0,02 bis 1,0 Gew.-% in Summe D1A bis D1G.

Als Stabilisatoren zur Verbesserung der thermischen und thermooxidativen Beständigkeit (D2) kann die erfindungsgemäße Formmasse Antioxidantien (D2), wie zum Beispiel eine oder mehrere Substanzen aus der Gruppe von (D2A) sterisch gehinderten Phenolen, (D2B) Phenolethern, (D2C) Phenolestern organischen oder phosphorhaltigen Säuren enthalten, wie zum Beispiel Pentaerithrityl-tetrakis-[3-(3,5-di-tert.butyl-4-hydroxyphenyl)-proprionat], Triethylenglykol-bis-[3-[3-tert.butyl-4-hydroxy-5-methylphenyl)-proprionat],3,3'-bis[3-(3,5-di-tert.butyl-4-hydroxyphenyl)-propionohydrazid), Hexamethylen-glykol-bis-[3-(3,5-di-tert.butyl-4-hydroxyphenyl)-propionat], 3,5-di-tert-butyl-4-hydroxytoluol, (D2D) Hydrochinone und (D2E) aromatische sekundäre Amine.

Bevorzugt sind Pentaerithrityl-tetrakis-[3-(3,5-di-tert.butyl-4-hydroxyphenyl)-proprionat], Hydrochinone (D2D) und aromatische sekundäre Amine (D2E).

In einer besonders bevorzugten Ausprägung wird ein sterisch gehindertes Phenol (D2B) zusammen mit einer Phosphorverbindung eingesetzt. Die genannten Antioxidantien (D2) können in Anteilen von 0,01 bis 10 Gew.-% eingesetzt werden. Bevorzugt sind Gehalte bis 2 Gew.-% in Summe.

Besonders bevorzugt ist die Kombination Ciba Irganox® 1010 mit Irgafos® 126.

Als Stabilisatoren zur Verbesserung der hydrolytischen Beständigkeit kann die erfindungsgemäße Formmasse Hydrolysestabilisatoren (D3), also eine oder mehrere Substanzen aus der Gruppe der (D3A) Glycidylether oder (D3B) Carbodiimide enthalten. Beispiele sind Mono-, Di- oder gegebenenfalls Mehrfachglycidylether von Ethylenglykol, Propoandiol, 1,4-Butandiol, 1,3-Butandiol, Glycerin und Trimethylolpropantrisglycidylether. Die genannten Stabilisatoren (D3) können in Anteilen von 0 bis 3 Gew.-% eingesetzt werden. Bevorzugt sind Gehalte bis 1,0 Gew.-% in Summe. Besonders bevorzugt sind polymere oder monomere Carbodiimide.

Als Stabilisatoren zur Verbesserung der acidolytischen Beständigkeit (D4) kann die erfindungsgemäße Formmasse säureabstrahierende Substanzen, also eine oder mehrere Substanzen aus der Gruppe der stickstoffhaltigen Verbindungen (D4A), der Erdalkali-Verbindungen (D4B) oder der Basen (D4C) enthalten.

Enthält die Matrix Polyacetale oder ähnlich säurelabile Polymere werden in einer bevorzugten Ausführungsform sowohl stickstoffhaltige Verbindungen (D4A) als auch Erdalkaliverbindungen (D4B) eingesetzt.

Beispiele für stickstoffhaltige Verbindungen (D4A) sind Melamin, Melaminformaldehyd-Addukte und Methylolmelanin.

Beispiele für Erdalkali-Verbindungen (D4B) sind Calciumpropionat, Tricalciumcitrat und Magnesiumstearat.

Beispiele für Basen (D4C) sind $Na_2CO_3$ und $NaHCO_3$.

Die genannten Säurefänger (D4) werden bevorzugt in Anteilen von 0,001 bis 1,0 Gew.-% eingesetzt. Säurefänger können auch als Mischungen eingesetzt werden.

Als Gleitmittel (D5) oder Entformungshilfen (D6) kann die erfindungsgemäße Formmasse Wachse, wie zum Beispiel Polyethylenwachse und/oder oxidierte Polyethylenwachse deren Ester und Amide sowie Fettsäureester bzw. Fettsäureamide enthalten.

Bevorzugt sind gemischte Ethylen-bis-fettsäureamide und Montanwachsglyceride.

Gleitmittel (D5) und Entformungshilfen (D6) werden bevorzugt in Anteilen von 0,01 bis 10 Gew.-% eingesetzt. Besonders bevorzugt sind Gehalte von 0,05 bis 3 Gew.-% in Summe. Gleitmittel können in der Regel auch als Entformungshilfen wirken und umgekehrt.

Als farbgebende Additive (D7) kann die erfindungsgemäße Formmasse farbgebende Substanzen, sogenannte Farbmittel, enthalten. Diese können sowohl organische als auch anorganische Pigmente als auch Farbstoffe sein.

Die Pigmente und Farbstoffe sind nicht besonders limitiert. Allerdings sollten Pigmente eingesetzt werden, die sich gleichmäßig in der Formmasse verteilen und sich nicht an Grenzflächen oder einzelnen Domänen anreichern, so daß eine ausgezeichnete Farbgleichmäßigkeit, Farbkonstanz und mechanische Eigenschaften gewährleistet werden können.

Beispielhaft seien genannt Anthrachinon-Farbstoffe und verschiedene Pigmente wie Ruß, Azo-Pigmente, Phthalocyanin-Pigmente, Perylen-Pigmente, Chinacridon-Pigmente, Anthrachinon-Pigmente, Indolin-Pigmente, Titandioxid-Pigmente, Eisenoxid-Pigmente und Kobalt-Pigmente. Auch beliebige geeignete Kombinationen von farbgebenden Substanzen können innerhalb der vorliegenden Erfindung eingesetzt werden. Beim Einsatz von Kohlenstoff-Rußen wird neben der farbgebenden Wirkung oft auch ein Beitrag zur Witterungsstabilisierung beobachtet.

Der Gehalt an farbgebenden Substanzen liegt bevorzugt bei 0,05 bis 10 Gew.- %, besonders bevorzugt bis 5 Gew.-% in Summe. Bei zu geringen Gehalten wird die gewünschte Farbtiefe oft nicht erreicht; höhere Gehalte sind meist nicht notwendig, ökonomisch nicht attraktiv und verschlechtern ggf. andere Eigenschaften wie die Mechanik der Formmasse.

Als kristallisationsregulierende Substanzen (D8) kann die erfindungsgemäße Formmasse homogen oder heterogen wirkende Nukleierungsmittel, also eine oder mehrere Substanzen aus der Gruppe von festen Anorganika und vernetzten Polymeren enthalten. Beispiele für (D8) Nukleierungsmittel sind pyrogenes Siliziumdioxid mit und ohne Oberflächenmodifikation, Calciumfluorid, Natriumphenylphosphinat, Aluminiumoxid, feinteiliges Polytetrafluorethylen, Valentinit, Pyrophyllit, Dolomit, Melamincyanurat, Borverbindungen, wie Bornitrid, Kieselsäure, Montmorillonit sowie organische modifizierter Montmorillonit, organische sowie anorganische Pigmente, Melamin-Formaldehydkondensate und Schichtsilikate.

In einer bevorzugten Ausführungsform enthält die erfindungsgemäße Formmasse Talkum oder verzweigte oder teilvernetzte Polymere als Nukleierungsmittel.

Nukleierungsmittel werden bevorzugt in Anteilen von 0,0001 bis 5 Gew.-% eingesetzt. Bevorzugt sind Gehalte von 0,001 bis 2,0 Gew.-% in Summe.

Weiterhin kann die erfindungsgemäße Formmasse Additive (D9) enthalten, die das Brandverhalten günstig beeinflussen. Es kommen alle bekannten Flammschutzmittel in Betracht, sowohl halogenhaltige als auch halogenfreie.

Bevorzugt sind Gehalte von 0 bis 30 Gew.-% in Summe.

Beispiele für Flammschutzmittel sind (D9A) stickstoffhaltige, (D9B) phosphor-haltige (in Oxidationsstufen des Phosphors von +5 bis -3), (D9C) Antimontrioxid (oft in Kombination mit halogenhaltigen Synergisten), (D9D) halogenhaltige Verbindungen sowie (D9E) halogenarme oder -freie Formulierungen.

Beispiele für D9A bzw. D9B sind Melaminpolyphosphat, Melamincyanurat, Resorcindiphosphat, Polyhalogendiphenyl, Polyhalogendiphenylether, Polyhalogenphthalsäure und ihre Derivate, Polyhalogenoligo- und -polycarbonate, substituierte Phosphine wie Triphenylphosphin, substituierte Phosphinoxide, Melaminphosphatester, Phosphinsäureester und entsprechende Salze, elementarer Phosphor, Hypophosphitester und entsprechende Salze, Phosphitester und entsprechende Salze, Phosphatester und entsprechende Salze.

Weiterhin kann die erfindungsgemäße Formmasse Additive (D10) enthalten, die als Schlagzähmodifizierer mechanische Eigenschaften günstig beeinflussen.

Bevorzugt sind Gehalte von 0 bis 20 Gew.-% in Summe.

Beispiele hierfür sind partikuläre Polymere, die oft kautschukelastisch sind bzw. kautschukelastische Komponenten enthalten.

Bevorzugte Arten von solchen Elastomeren sind die sog. Ethylen-Propylen (EPM) bzw. Ethylen-Propylen-Dien-(EPDM)-Kautschuke. EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt.

Bevorzugt werden Hexa-1,5-dien-5-Ethyliden-norbornen und Dicyclopentadien.

Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäure-derivate bzw. Epoxygruppen enthaltende Monomere werden vorzugsweise durch Zugabe von Dicarbonsäure- bzw. Epoxygruppen enthaltenden Monomeren in den Kautschuk eingebaut.

Bevorzugte Elastomere sind auch Emulsionspolymerisate, deren Herstellung z.B. von Blackley in der Monographie "Emulsion Polymerization" beschrieben wird. Die verwendbaren Emulgatoren und Katalystoren sind an sich bekannt. Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflusst. Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden. Die Weich- oder Kautschukphase (mit einer Glasübergangstemperatur von unter 0°C) der Elastomeren kann den Kern, die äussere Hülle oder eine mittlere Schale (bei Elastomeren mit mehr als zweischaligem Aufbau) darstellen; bei mehrschaligen Elastomeren können auch mehrere Schalen aus einer Kautschukphase bestehen. Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, alpha -Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannten pfropfvernetzende Monomere (graftlinking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisations-geschwindigkeiten bringen einen bestimmten Anteil an ungesättigten Doppelbindungen im Kautschuk mit sich. Wird anschliessend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomere.

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat /(Meth)-acrylsäure-Copolymere, n-Butylacrylat/Glycidylacrylat- oder n-Butylacrylat / Glycidylmethacrylat-Copolymere, Pfropfpolymerisate mit einem inneren Kern aus n-Butylacrylat oder auf Butadienbasis und einer äusseren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Weitere bevorzugte Kautschuke sind Polyurethane, Polyetherester und Siliconkautschuke.

Selbstverständlich können auch Mischungen der vorstehend aufgeführten Kautschuktypen eingesetzt werden.

Als Füll- und Verstärkungsmittel (D11) können die erfindungsgemässen thermoplastischen Formmassen faser- , plättchen- oder teilchenförmige Füllstoffe und Verstärkungsmittel enthalten.

Beispiele sind Kohlenstofffasern, Aramidfasern, Glasfasern, Glaskugeln, amorphe Kieselsäure, Asbest, Calciumsilicat (Wollastonit), Aluminiumsilicat, Magnesiumcarbonat, Kaolin, Kreide, Kalk, Marmor, gepulverter Quarz, Glimmer, Schwerspat, Feldspat, Schicht- und Alumosilikate, Bentonit, Montmorillonit unjd Talk.

Die Füllstoffe können durch organische Komponenten oder Silanisierung modifiziert sein. Der Anteil derartiger Füllstoffe beträgt im allgemeinen bis zu 50 Gew.-%, bevorzugt bis zu 35 Gew.-%.

Weiterhin kann die erfindungsgemäße Formmasse Additive (D12) enthalten, welche die Mobilität der Kette in den amorphen Phasen beeinflussen oder die Glastemperatur senken oder anderweitig als Weichmacher wirken.

Beispiele sind Phthalsäuredioctylester, Phthalsäuredibenzylester, Phthalsäurebutylbenzylester, Kohlenwasserstofföle, N-(n-Butyl)benzolsulfonamid und o- und p-Tolylethylsulfonamid.

Als weitere Additive (D13) kann die erfindungsgemäße Formmasse Additive enthalten, die nach dem jeweiligen Stand der Technik funktionelle Eigenschaften der Formmasse (z.B. elektrische Leitfähigkeit und/oder Antistatikvermögen) gewährleisten oder verbessern.

Eine Herstellungsweise der erfindungsgemäßen Formmasse oder eines geeigneten Zwischenproduktes ist zum Beispiel das Mischen aller Bestandteile bei erhöhter Temperatur, d.h. oberhalb des Schmelzpunktes des, einiger oder aller Matrixpolymere (A) in gut mischenden Aggregaten wie z.B. Brabendern, Extrudern, vorzugsweise Zweischnekkenextrudern, oder auf Mischwalzen.

Eine weitere Herstellungsweise ist das Mischen von Komponenten bei Raumtemperatur und das anschließende Aufschmelzen der Matrixpolymere in einem Extruder, vorzugsweise Zweischneckenextruder.

Eine weitere Herstellungsweise ist dann möglich, wenn die Matrix A ein Polymer enthält, das über eine Polykondensationsreaktion aufgebaut wird: In diesem Fall können Additive zur besseren Dispergierung bereits während des Molekulargewichtsaufbaus zugegeben werden. Vor allem für nanoskalige Additive C bietet diese Variante Vorteile. Enthält die Matrix einen Polyester, so können solche und andere Komponenten am Ende der Umesterung bzw. am Beginn der Polykondensation zugegeben werden.

Ebenfalls können die Komponenten einzeln oder in Kombination zunächst zu höher konzentrierten Masterbatchen verarbeitet werden und diese anschließend mit weiteren Komponenten zu der erfindungsgemäßen Mischung weiterverarbeitet werden.

Die im Rahmen dieser Beschreibung erwähnten Additive können in beliebigen geeigneten Schritten hinzugeben werden. Die Endrezeptur der Formmasse kann auch so erzeugt werden, daß einzelne oder mehrere Additive erst kurz vor der Erzeugung des Formkörpers zugegeben werden. Auch die Mischung von Granulat mit einer Additivpaste oder die Mischung von zwei oder mehreren Sorten an Granulat, wobei mindestens eines der erfindungsgemäßen Formmasse entspricht oder sie letztendlich zusammen die erfindungsgemäße Zusammensetzung ergeben, sind geeignet.

Die erfindungsgemäße Formmasse ist thermoplastisch und damit den üblichen Verarbeitungsweisen zugänglich.

Die Verarbeitung erfolgt üblicherweise durch Einsatz eines Granulats, das in bekannter Weise, z.B. durch Extrusion, Spritzguss, Vakuumformen, Blasformen oder Schäumen zu Formkörpern weiterverarbeitet wird.

Die erfindungsgemäße Formmasse eignet sich als technischer Werkstoff zur Herstellung von Halbzeug und Fertigteilen. Auch Formteile in bestrahlter und unbestrahlter Form, die aus der erfindungsgemäßen Formmasse mittels üblicher Verarbeitungstechniken, insbesondere durch Spritzguß, hergestellt werden, sind Gegenstand der vorliegenden Erfindung.

Die erfindungsgemäßen Formteile können in der Computer-, Elektro-, Elektronik-, Haushaltswaren- und Kraftfahrzeugindustrie Anwendung finden.

Die Kennzeichnung und Beschriftung von erfindungsgemäßen Formteilen z.B. Tastaturen, Kabeln, Leitungen, Zierleisten bzw. Funktionsteilen im Heizungs-, Lüftungs- und Kühlbereich oder Schalter, Stecker, Hebel und Griffe, die erfindungsgemäße Formmasse enthalten, kann mit Hilfe von Laserlicht erzielt werden.

Weiterhin können die erfindungsgemäßen Formteile als Verpackungen eingesetzt werden.

Gegenstand der vorliegenden Erfindung ist weiterhin ein Verfahren zur Lasermarkierung von thermoplastischen Formteilen umfassend die Schritte:

i) Herstellen eines Formteils aus einer Formmasse enthaltend mindestens einen teilkristallinen Thermoplasten A) und Komponenten B) und/oder C) sowie D) wie oben definiert, und

ii) Bestrahlen vorbestimmter Teile mindestens einer Oberfläche des Formteils mit Laserlicht um an den bestrahlten Stellen eine Änderung des optischen Erscheinungsbildes zu bewirken.

Gegenstand der vorliegenden Erfindung ist ebenfalls die Verwendung der oben definierten Komponenten B) und/oder C) zur Lasermarkierung von Formteilen.

Die damit erhaltenen Markierungen zeichnen sich dadurch aus, daß sie wisch- und kratzfest, stabil bei nachträglichen Sterilisationsprozessen und hygienisch rein beim Markierungsprozeß aufbringbar sind.

Ein weiteres Anwendungsgebiet für die Laserbeschriftung sind Kunststoffmarken zur individuellen Kennzeichnung von Tieren, sogenannte Geflügelringe, Cattle Tags oder Ohrmarken. Die Beschriftung muß sehr dauerhaft werden, da die Marke teilweise über mehrere Jahre an den Tieren verbleiben.

Die Erfindung wird durch die nachstehenden Beispiele erläutert. Eine Begrenzung ist dadurch nicht beabsichtigt.

Beispiele

Es wurden Proben hergestellt und untersucht, die als teilkristallinen technischen Thermoplasten (A) Polyoxymethylen (POM) oder die Polybutylenterephthalat (PBT) enthalten.

Die erfindungsgemäßen Beispiele enthielten neben der Komponente A entweder lichtsensitive Verbindungen mit mehreren Kationen (B) oder nanoskalige Teilchen von lichtsensibilisierenden Oxiden (C) oder eine Kombination aus beidem. Dagegen enthielten die als Vergleichsbeispiele herangezogenen Proben entweder lichtsensitive Verbindungen mit einem Kation oder mikroskalige Teilchen von lichtsensibilisierenden Oxiden oder dienten als Referenz ohne lichtempfindliches Additiv.

In der nachfolgenden Tabelle sind die Probenzusammensetzungen aufgeführt.

Enthielt das Beispiel als Komponente A den Eintrag POM, so wurde als Matrix Polyoxymethylen Hostaform® C9021 (Ticona GmbH) verwendet.

Als übliche Additive $D_{POM}$ wurden als Antioxidans Irganox® 1010 (Ciba), als Lichtstabilisatoren Tinuvin® 234 und Tinuvin® 770 (jeweils Ciba), als Fließhilfsmittel und Entformhilfe Licowachs® C (Clariant GmbH), als Säureabstraktoren Melamin und Calciumpropionat eingesetzt.

Enthielt das Beispiel als Komponente A den Eintrag PBT, so wurde als Matrix PBT Celanex® 2003 (Ticona GmbH) verwendet.

Als übliche Additive $D_{PBT}$ wurden als Antioxidans Irganox® 1010 und Irgafos® 126 (jeweils Ciba), als Nukleierungsmittel Talkum, als Fließhilfsmittel und Entformhilfe Licolub® WD4 (Clariant GmbG) und als Feuchtigkeits-abstraktoren Stabaxol® (Rheinchemie Rheinau GmbH) eingesetzt.

Enthielt das Beispiel als Komponente B den Eintrag CuOHP so wurde Kupfer(II)hydroxidphosphat bezogen von Fa. Aldrich bzw. Fa. Chemische Fabrik Budenheim KG eingesetzt.

Enthielt das Beispiel als Komponente B den Eintrag FeP, so wurde ein Additivpulver eingesetzt, das sowohl Fe(II) als auch Fe(III) als Kationen enthält. Es wurde als Eisen(II)phosphit mit geringen Mengen Eisen(III) und geringen Mengen Phosphat von Fa. Chemische Fabrik Budenheim KG bezogen und eingesetzt.

Enthielt das Beispiel als Komponente B den Eintrag CuFeP so wurden Additivpulver eingesetzt, die sowohl Cu(II) als auch Fe(II) und Fe(III) als Kationen enthalten und von Fa. Chemische Fabrik Budenheim KG bezogen wurden. Die Additive wurden sowohl als unumgesetzte Mischung der Einzelsalze (ca. 50% Kupfer(II)hydroxidphosphat mit ca. 50% Eisenphosphit) als auch als umgesetzte Mischsalze zur Herstellung der Formmassen eingesetzt. Mit Röntgenstrahlung erhaltene Beugungsspektren an der Formmasse wiesen deutliche Unterschiede zu denen der einfachen Ausgangssalze auf.

Enthält das Beispiel als Komponente B den Eintrag SnCuP, so wurden Additivpulver eingesetzt, die sowohl Sn(II) als auch Cu(II) als Kationen enthalten und von Fa. Chemische Fabrik Budenheim KG bezogen wurden. Die Additive wurden sowohl als unumgesetzte Mischung der Einzelsalze (ca. 80% Zinn(II)phosphat mit ca. 20% Kupfer(II)hydroxidphosphat) als auch als umgesetzte Mischsalze zur Herstellung der Formmassen eingesetzt. Mit Röntgenstrahlung erhaltene Beugungsspektren an der Formmasse wiesen deutliche Unterschiede zu denen der einfachen Ausgangssalze auf.

Enthielt das Beispiel als Komponente B den Eintrag CuSbP so wurde ein Additivpulver eingesetzt, das sowohl Cu(II) als auch Sb(III) als Kationen enthält und von Fa. Chemische Fabrik Budenheim KG bezogen wurde. Die Additive wurden als unumgesetzte Mischung der Einzelsalze (ca. 80% Antimon(III)phosphat mit ca. 20% Kupfer(II)hydroxidphosphat) zur Herstellung der Formmassen eingesetzt. Mit Röntgenstrahlung erhaltene Beugungsspektren an der Formmasse wiesen deutliche Unterschiede zu denen der einfachen Ausgangssalze auf.

Enthielt das Beispiel als Komponente C den Eintrag nano-$TiO_2$ (n-$TiO_2$), so wurden Titandioxide mit Teilchendurchmessern von wenigen Nanometern, wie P25 der Fa. Degussa oder Hombitec RM130F der Fa. Sachtleben eingesetzt.

Durch Einarbeitung unter hoher Scherung und in ein relativ niedrigmolekulares Präpolymer wurde angestrebt, diese Additive nanoteilig einzuarbeiten und größere Agglomerate weitgehend zu vermeiden.

Enthielt das Vergleichsbeispiel als Komponente D7 den Eintrag $\mu$-$TiO_2$, so wurde 1% Titandioxid-Weisspigment mit $d_{50}$ von 0,3 $\mu$m wie die Typen 2078 oder 2220 der Fa. Kronos eingesetzt.

Die Formmassen wurden in einem Doppelschneckenextruder mit zwei Knetzonen Berstorff ZE-25 compoundiert. Bei Formmassen, die nano-$TiO_2$ enthalten, wurden die nano-Additive bereits während der Polykondensation zugesetzt.

Die Formmassen wurden anschließend zu 90mm x 65mm x 1mm-Platten spritzgegossen.

Zur Laserbeschriftung wurde ein DPL Magic Marker der Fa. ACI Laser GmbH (Sömmerda, Thüringen) eingesetzt und die Beschriftungsparameter wie folgt variiert:

Es wurden Pumpintensitäten von 40 bis 90%, Pulsfrequenzen von 1 bis 6 kHz variiert und hierbei horizontale Vorschubgeschwindigkeit und vertikaler Zeilenversatz so gewählt, dass kubische Muster von 40, 50 und 75 $\mu$m realisiert wurden.

Zur Bestimmung der optischen Eigenschaften der Matrix und Markierungen wurde eine auf einem Mikroskop BX51 der Fa. Olympus montierte Digitalkamera Colorview II nebst Bildauswertungssoftware analySIS Pro der Fa. Soft Imaging Systems verwendet.

Zur Bestimmung der Helligkeits- und Dunkelheitswerte (entlang der weiss-schwarz-L*-Achse) wurde unter maximalem Auflicht ein Mikroskopbild augenommen, dieses in ein Grauwertbild überführt und über den aufgenommenen Bereich gemittelt. Mit diesem Verfahren wurden digitale quantitative Daten von 0 für schwarz" bis 255 für "weiss" erhalten. Die Aufnahmen wurden für alle Proben unter identischen Beleuchtungsbedingungen durchgeführt. Die Matrix und die Lasermarkierungen wurden jeweils separat aufgenommen und ausgewertet.

Zur Bestimmung der Farbwerte wurde unter maximalem Auflicht ein Mikroskopbild aufgenommen, dieses über den aufgenommenen Bereich gemittelt und die Rot-, Grün-, und Blau-Anteile ausgelesen. Mit diesem Verfahren wurden digitale quantitative Daten von 0 bis 255 für die Anteile der drei Grundfarben erhalten. Die Aufnahmen wurden für alle Proben unter identischen Beleuchtungsbedingungen durchgeführt. Die Matrix und die Lasermarkierungen wurden jeweils separat aufgenommen und ausgewertet.

Die Ergebnisse liegen der Zusammenstellung der Tabelle zugrunde.

Wurde das Beispiel in der Sparte Lichtempfindlichkeit mit "gut" (+) bewertet, so wurden bereits in Markierungsfeldern mit Pumpintensitäten kleiner gleich 50% und Pulsfrequenzen größer als 4 kHz ausreichende Kontraste erzielt.

Wurde das Beispiel in der Sparte Lichtempfindlichkeit mit ungenügend" (-) bewertet, so wurden in Markierungsfeldern mit Pumpintensitäten kleiner gleich 50% und Pulsfrequenzen größer als 4 kHz keine ausreichenden Kontraste erzielt.

Wurde das Beispiel in der Sparte Lichtempfindlichkeit mit "mittelmäßig" (0) bewertet, so lagen die Ergebnisse dazwischen.

Wurde das Beispiel in der Sparte Matrixhelligkeit mit "gut" (+) bewertet, so wies die PBT-Matrix Helligkeitswerte größer 222 bzw. die POM-Matrix größer als 220 auf.

Wurde das Beispiel in der Sparte Matrixhelligkeit mit ungenügend" (-) bewertet, so wies die PBT-Matrix Helligkeitswerte kleiner 220 bzw. die POM-Matrix kleiner 216 auf.

Wurde das Beispiel in der Sparte Matrixhelligkeit mit "mittelmäßig" (0) bewertet, so lagen die Ergebnisse dazwischen.

Wurde das Beispiel in der Sparte Matrixfarbe mit "weiss", "hell" oder "hellgrau" bewertet, so waren die Rot-Grün-Blau-Anteile weitgehend gleich, bei "türkis" waren etwas stärkere Intensitäten im Grün-Blau-Bereich zu verzeichnen, bei "rötlich" waren etwas stärkere Intensitäten in Rot zu verzeichnen.

Wurde das Beispiel in der Sparte Markierungsdunkelheit mit "gut" (+) bewertet, so wies die Markierung Dunkelheitswerte (=255-Helligkeit) größer 80 auf.

Wurde das Beispiel in der Sparte Markierungsdunkelheit mit "ungenügend" (-) bewertet, so wies die Markierung Dunkelheitswerte kleiner 50 auf.

Wurde das Beispiel in der Sparte Markierungsdunkelheit mit "mittelmäßig" (0) bewertet, so lagen die Ergebnisse dazwischen.

Wurde das Beispiel in der Sparte Markierungsfarbe mit "schwarz", "anthrazit" oder "schwarz-grau" bewertet, so waren die Rot-Grün-Blau-Anteile weitgehend gleich, bei "schwarz-braun" waren etwas stärkere Intensitäten im Rot-Grün- oder Rot-Blau-Bereich zu verzeichnen, bei "scharz-rot" waren etwas stärkere Intensitäten in Rot zu verzeichnen.

Wurde das Beispiel in der Sparte Kontrast mit "gut" (+) bewertet, so wies das Verhältnis von Matrixhelligkeit/Markierungshelligkeit einen Wert größer 1,25 auf.

Wurde das Beispiel in der Sparte Kontrast mit "ungenügend" (-) bewertet, so wies das Verhältnis von Matrixhelligkeit/Markierungshelligkeit einen kleineren Wert auf.

Wurde das Beispiel in der Sparte Markierungstopologie mit "gut" (+) bewertet, so wiesen die markierten Stellen keine fühlbare lokale Erhöhung der Rauhigkeit (weder Krater als Einfallstellen noch aufgeschäumte Erhöhungen) auf.

Wurde das Beispiel in der Sparte Markierungstopologie mit "ungenügend" (-) bewertet, so wiesen die markierten Stellen deutlich fühlbare lokale Erhöhung der Rauhigkeit (weder Krater als Einfallstellen noch aufgeschäumte Erhöhungen) auf.

Wurde das Beispiel in der Sparte Markierungstopologie mit "mittelmäßig" (0) bewertet, so lagen die Ergebnisse dazwischen.

Der Tabelle ist zu entnehmen, daß die erfindungsgemäßen Formmassen keine ungenügende Bewertungen der Laserbeschriftung aufweisen, während bei den Vergleichsbeispielen durchgängig mindestens ein Kriterium als ungenügend eingestuft wurde.

Vergleichsbeispiele sind mit "V" gekennzeichnet; erfindungsgemäße Beispiele durch Angabe eines Zahlenwertes.

*Tabelle:*

| | Komp.(A) (Gew %) | A | Komp.(B) (Gew %) | B | Komp.(C) (Gew %) | C | Komp.(D) (Gew%) | D7 | D | Lichtempfin dlichkei t | Matrix hellig keit | Matrix - farbe | Markieru ngs- dunkelh eit | Markierun gs- farbe | Kontr ast | Topol ogie |
|---|---|---|---|---|---|---|---|---|---|---|---|---|---|---|---|---|
| V 1 | 98,55 | POM | 0 | - | 0 | - | 1,45 | - | DpOM | - | 0 | hell | keine | keine | - | 0 |
| V 2 | 98,35 | POM | 0,5 | CuO HP | 0 | - | 1,45 | - | DpOM | + | - | türkis | + | schwarz | + | 0 |
| V 3 | 97,55 | POM | 0 | - | 0 | - | 2,45 | μ-TiO2 | DpOM | - | + | weiss | - | hell | - | 0 |
| V 4 | 99,15 | PBT | 0 | - | 0 | - | 0,85 | - | DpBT | - | 0 | hell | 0 | anthrazit | + | - |
| V 5 | 98,95 | PBT | 0,2 | CuO HP | 0 | - | 0,85 | - | DpBT | + | - | türkis | + | schwarz | + | + |
| V 6 | 98,95 | PBT | 0,2 | FeP | 0 | - | 0,85 | - | DpBT | + | - | rötlich | + | schwarzrot | + | - |
| V 7 | 98,15 | PBT | 0 | - | 0 | - | 1,85 | μ-TiO2 | DpBT | 0 | + | weiss | - | grau | - | - |
| 8 | 98,35 | POM | 0,5 | CuFe Misc P hung | 0 | - | 1,45 | - | DpOM | + | 0 | hellgr au | + | schwarz-braun | + | 0 |
| 9 | 98,35 | POM | 0,5 | CuFe Misc P hsalz | 0 | - | 1,45 | - | DpOM | + | 0 | hellgr au | + | schwarz-braun | + | 0 |
| 1 0 | 98,35 | POM | 0,5 | SnC Misc uP hung | 0 | - | 1,45 | - | DpOM | + | + | hell | + | schwarz-grau | + | 0 |
| 1 1 | 98,35 | POM | 0,5 | SnC Misc uP hsalz | 0 | - | 1,45 | - | DpOM | + | + | hellgr au | + | schwarz-grau | + | 0 |
| 1 2 | 98,35 | POM | 0,5 | CuS bP | 0 | - | 1,45 | - | DpOM | + | + | hell | + | schwarz-grau | + | 0 |
| 1 3 | 97,35 | POM | 0,5 | CuFe Misc P hung | 0 | - | 2,45 | μ-TiO2 | DpOM | 0 | + | weiss | 0 | schwarz-braun | + | 0 |
| 1 4 | 97,35 | POM | 0,5 | CuFe Misc P hsalz | 0 | - | 2,45 | μ-TiO2 | DpOM | 0 | + | weiss | 0 | schwarz-braun | + | 0 |
| 1 5 | 97,35 | POM | 0,5 | SnC Misc uP hung | 0 | - | 2,45 | μ-TiO2 | DpOM | 0 | + | weiss | 0 | schwarz-grau | + | 0 |
| 1 6 | 97,35 | POM | 0,5 | SnC Misc uP hsalz | 0 | - | 2,45 | μ-TiO2 | DpOM | 0 | + | weiss | 0 | schwarz-grau | + | 0 |
| 17 | 97,35 | POM | 0,5 | CuSbP | 0 | - | 2,45 | μ-TiO2 | DpOM | 0 | + | weiss | 0 | schwarz-grau | + | 0 |

(fortgesetzt)

| | Komp.(A) (Gew %) | A | Komp.(B) (Gew %) | B | Komp.(C) (Gew %) | C | Komp.(D) (Gew%) | D7 | D | Lichtempfin dlichkei t | Matrix hellig keit | Matrix - farbe | Markieru ngs- dunkelh eit | Markierun gs- farbe | Kontr ast | Topol ogie |
|---|---|---|---|---|---|---|---|---|---|---|---|---|---|---|---|---|
| 1 8 | 98,95 | PBT | 0,2 | CuFe Misc P hung | 0 | - | 0,85 | - | D$_{PBT}$ | + | 0 | hellgr au | + | schwarz-braun | + | + |
| 1 9 | 98,95 | PBT | 0,2 | CuFe Misc P hsalz | 0 | - | 0,85 | - | D$_{PBT}$ | + | 0 | hellgr au | + | schwarz | + | + |
| 2 0 | 98,95 | PBT | 0,2 | SnC Misc uP hung | 0 | - | 0,85 | - | D$_{PBT}$ | 0 | 0 | hell | + | schwarz-grau | + | + |
| 2 1 | 98,95 | PBT | 0,2 | SnC Misc uP hsalz | 0 | - | 0,85 | - | D$_{PBT}$ | 0 | 0 | hell | + | schwarz-grau | + | + |
| 2 2 | 98,95 | PBT | 0,2 | CuS bP | 0 | - | 0,85 | - | D$_{PBT}$ | 0 | 0 | hell | + | schwarz-grau | + | 0 |
| 2 3 * | 98,75 | PBT | 0,2 | CuFe P | 0,2 | n-TiO2 | 0,85 | - | D$_{PBT}$ | + | + | hellgr au | + | schwarz-braun | + | + |
| 2 4 * | 98,75 | PBT | 0,2 | SnC uP | 0,2 | n-TiO2 | 0,85 | - | D$_{PBT}$ | + | + | hell | + | schwarz | + | + |
| 2 5 * | 98,75 | PBT | 0,2 | SnC uP | 0,2 | n-TiO2 | 0,85 | - | D$_{PBT}$ | + | + | hell | + | schwarz | + | 0 |
| 2 6 | 98,95 | PBT | 0 | - | 0,2 | n-TiO2 | 0,85 | - | D$_{PBT}$ | 0 | + | hell | + | schwarz | + | 0 |
| 2 7 | 97,95 | PBT | 0,2 | CuFe Misc P hung | 0 | - | 1,85 | μ-Ti02 | D$_{PBT}$ | + | + | weiss | + | schwarz | + | 0 |
| 2 8 | 97,95 | PBT | 0,2 | CuFe Misc P hsalz | 0 | - | 1,85 | μ-TiO2 | D$_{PBT}$ | + | + | weiss | + | schwarz | + | 0 |
| 2 9 | 97,95 | PBT | 0,2 | SnC Misc uP hung | 0 | - | 1,85 | μ-TiO2 | D$_{PBT}$ | + | + | weiss | + | schwarz | + | + |
| 3 0 | 97,95 | PBT | 0,2 | SnC Misc uP hsalz | 0 | - | 1,85 | μ-TiO2 | D$_{PBT}$ | + | + | weiss | + | schwarz | + | + |
| 3 1 | 97,95 | PBT | 0,2 | CuS bP | 0 | - | 1,85 | μ-TiO2 | D$_{PBT}$ | + | + | weiss | + | schwarz | + | 0 |
| 3 2 * | 97,75 | PBT | 0,2 | CuFe Misc P hung | 0,2 | n-TiO2 | 1,85 | μ-TiO2 | D$_{PBT}$ | + | + | weiss | + | schwarz | + | + |
| 3 3 * | 97,75 | PBT | 0,2 | CuFe Misc P hsalz | 0,2 | n-TiO2 | 1,85 | μ-TiO2 | D$_{PBT}$ | + | + | weiss | + | schwarz | + | + |

(fortgesetzt)

| | Komp.(A) (Gew %) | A | Komp.(B) (Gew %) | B | Komp.(C) (Gew %) | C | Komp.(D) (Gew%) | D7 | D | Lichtempfin dlichkeit | Matrix hellig keit | Matrix - farbe | Markieru ngs- dunkelh eit | Markierun gs- farbe | Kontr ast | Topol ogie |
|---|---|---|---|---|---|---|---|---|---|---|---|---|---|---|---|---|
| 3 4 * | 97,75 | PBT | 0,2 | SnC Misc uP hung | 0,2 | n-TiO2 | 1,85 | μ-TiO2 | D<sub>PBT</sub> | + | + | weiss | + | schwarz | + | + |
| 3 5 | 97,75 | PBT | 0,2 | SnC Misc uP hsalz | 0,2 | n-TiO2 | 1,85 | μ-TiO2 | D<sub>PBT</sub> | + | + | weiss | + | schwarz | + | + |
| 3 6 * | 97,75 | PBT | 0,2 | CuS bP | 0,2 | n-TiO2 | 1,85 | μ-TiO2 | D<sub>PBT</sub> | + | + | weiss | + | schwarz | + | 0 |
| 3 7 | 97,75 | PBT | 0,2 | - | 0,2 | n-TiO2 | 1,85 | μ-Ti02 | D<sub>PBT</sub> | + | + | weiss | + | anthrazit | + | 0 |

*erfindungsgemäße Beispiele

**Patentansprüche**

1. Lasermarkierbare Formmasse enthaltend

   A) mindestens einen teilkristallinen Thermoplasten und
   C) mindestens ein partikuläres anorganisches Oxid mit einem mittleren Teilchendurchmesser von weniger als 250 nm, bestimmt durch Elektronen- oder Röntgenstrahlmethoden und
   B) mindestens eine partikuläre lichtsensitive salzartige Verbindung, die unter dem Einfluß von Laserlicht ihre Farbe ändert oder zu einer Farbänderung im Kunststoff führt und die mehrere Kationen enthält, von denen eines ausgewählt wird aus der Gruppe bestehend aus Ti, Cr, Mn, Fe, Co, Ni, Cu, Zn, Y, Zr, Nb, Mo, Ag, Sn, Sb, La, Pr, Ta, W, Ce und von denen ein weiteres ausgewählt wird aus der Gruppe bestehend aus Elementen der 3.-6. Periode der II. und III. Hauptgruppe, der 5.-6. Periode der IV. Hauptgruppe sowie der 4.-5. Periode der III.-VIII. Nebengruppe des Periodensystems und der Lanthaniden, und
   D) gegebenenfalls weitere übliche Additive.

2. Lasermarkierbare Formmasse nach Anspruch 1, **dadurch gekennzeichnet, dass** Komponente B eine mittlere Teilchengröße ($d_{50}$) von kleiner als 10 $\mu$m aufweist.

3. Lasermarkierbare Formmasse nach Anspruch 1 oder 2, **dadurch gekennzeichnet, dass** der Gewichtsanteil von Komponente A) 50 bis 99,95 %, bezogen auf die Gesamtmasse der Formmasse, beträgt.

4. Lasermarkierbare Formmasse nach einem oder mehreren der Ansprüche 1 bis 3, **dadurch gekennzeichnet, dass** Komponente A) ausgewählt wird aus der Gruppe bestehend aus Polyacetalen, Polyestern, Polyamiden, Polyarylenethern, Polyarylensulfiden, Polyethersulfonen, Polysulfone, Polyaryletherketonen, Polyolefinen, flüssig-kristallinen Polymeren und Kombinationen mit einem oder mehreren dieser Polymeren.

5. Lasermarkierbare Formmasse nach Anspruch 1, **dadurch gekennzeichnet**, Komponente B) Anionen der allgemeinen Formel $A_aO_o(OH)_y{}^{zn}$ aufweist, worin A = drei- oder fünfwertiger Phosphor, vier- oder sechswertiger Schwefel, vierwertiges Molybdän oder sechswertiges Wolfram bedeuten, a, o und z unabhängig voneinander ganze Zahlen mit Werten von 1-20 bedeuten, und y eine ganze Zahl mit Werten zwischen 0 und 10 ist.

6. Lasermarkierbare Formmasse nach mindestens einem der Ansprüche 1 bis 5, **dadurch gekennzeichnet, dass** Komponente C) einen mittleren Teilchendurchmesser von weniger als 200 nm aufweist.

7. Lasermarkierbare Formmasse nach mindestens einem der Ansprüche 1 bis 6, **dadurch gekennzeichnet, dass** Komponente C) einen von Komponente A) unterschiedlichen Brechungsindex aufweist.

8. Lasermarkierbare Formmasse nach einem oder mehreren der Ansprüche 1 bis 7, **dadurch gekennzeichnet, dass** das anorganische Oxid ausgewählt wird aus der Gruppe der Oxide der Elemente der 3.-6. Periode der III. und IV. Hauptgruppe, der 5.-6. Periode der V. Hauptgruppe, der 4.-5. Periode der III.-VIII. Nebengruppe und der Lanthaniden.

9. Lasermarkierbare Formmasse nach mindestens einem der Ansprüche 1 bis 8, **dadurch gekennzeichnet, dass** das anorganische Oxid (C) ausgewählt wird aus der Gruppe bestehend aus $AbO_3$, $Si\theta_2$, silikatischen sowie aiumosilikatischen Mineralien, silikatischen Gläsern, $TiO_2$, $ZnO$, $ZrO_2$, $SnO_2$, $Sb_2O_3$, $Sb_2O_5$, $Bi_2O_3$, sowie deren Mischoxiden mit weiteren dotierenden Elementen.

10. Lasermarkierbare Formmasse nach Anspruch 9, **dadurch gekennzeichnet, dass** das anorganische Oxid (C) $TiO_2$ in Anatas- und/oder Rutiiform ist.

11. Lasermarkierbare Formmasse nach mindestens einem der Ansprüche 1 bis 10, **dadurch gekennzeichnet, dass** diese als Zusatz mindestens ein sterisch gehindertes Phenol zusammen mit einer Phosphorverbindung enthält.

12. Verfahren zur Lasermarkierung von thermoplastischen Formteilen umfassend die Schritte:

    i) Herstellen eines Formteils aus einer Formmasse enthaltend mindestens einen teilkristallinen Thermoplasten A) und Komponenten C) und B) und gebenenfalls D) nach Anspruch 1 bis 11, und
    ii) Bestrahlen vorbestimmter Teile mindestens einer Oberfläche des Formteils mit Laserlicht um an den bestrahlten Stellen eine Änderung des optischen Erscheinungsbildes zu bewirken.

**13.** Formteil erhältlich durch Formgebung einer lasermarkierbaren Formmasse nach einem oder mehreren der Ansprüche 1 bis 11.

**14.** Lasermarkiertes Formteil erhältlich durch Bestrahlen eines Formteils aus einer lasermarkierbaren Formmasse nach einem oder mehreren der Ansprüche 1 bis 11 mit Laserlicht.

**15.** Verwendung von partikulären anorganischen Oxiden C) mit einem mittleren Teilchendurchmesser von weniger als 250 nm, bestimmt durch Elektronen- oder Röntgenstrahlmethoden und partikulären lichtsensitiven salzartigen Verbindungen B) oder deren Mischungen, die unter dem Einfluss von Laserlicht ihre Farbe ändern bzw. zu einer Farbänderung im Kunststoff führen und die mehrere Kationen enthalten, von denen eines ausgewählt wird aus der Gruppe bestehend aus Ti, Cr, Mn, Fe, Co, Ni, Cu$_1$ Zn, Y, Zr, Nb, Mo, Ag, Sn, Sb, La, Pr, Ta, W, Ce und von denen ein weiteres ausgewählt wird aus der Gruppe bestehend aus Elementen der 3.-6. Periode der II. und III. Hauptgruppe, der 5.-6. Periode der IV. Hauptgruppe sowie der 4.-5. Periode der III.-VIII. Nebengruppe und der Lanthaniden zur Lasermarkierung von Formteilen.

**Claims**

**1.** Laser-markable molding composition containing

A) at least a semi-crystalline thermoplastic, and
C) at least a particulate inorganic oxide having an average particle diameter of less than 250 nm, determined by electron or X-ray methods, and
B) at least a particulate light-sensitive salt-like compound, which changes its color or leads to a color change in the plastic material under the influence of laser light and which comprises several cations, one of which is selected from the group consisting of Ti, Cr, Mn, Fe, Co , Ni, Cu, Zn, Y, Zr, Nb, Mo, Ag, Sn, Sb, La, Pr, Ta, W, Ce, and another one of which is selected from the group consisting of elements of the 3.-6. period of the II. and III. main group, of the 5.-6. period of the IV. main group , as well as of the 4.-5. period of the III. - VIII. auxiliary group of the Periodic Table and the lanthanides, and
D) optionally further customary additives.

**2.** Laser-markable molding composition according to claim 1, **characterized in that** component B has an average particle size (d50) of less than 10 $\mu$m.

**3.** Laser-markable molding composition according to claim 1 or 2, **characterized in that** the weight percentage of component A) ranges selected from 50 to 99.95 %, based on the total mass of the molding mass.

**4.** Laser-markable molding composition according to one or more of claims 1 to 3, **characterized in that** component A) is selected selected from the group consisting of polyacetals, polyesters, polyamides, polyarylene ethers, polyarylene sulfides, polyether sulfones, polysulfones, polyaryl ether ketones, polyolefins, liquid-crystalline polymers, and combinations with one or more of these polymers.

**5.** Laser-markable molding composition according to claim 1, **characterized in that** component B) comprises anions of the general formula $A_aO_o(OH)_y^{z"}$, wherein A = trivalent or pentavalent phosphorus, tetravalent or hexavalent sulfur, tetravalent molybdenum or hexavalent tungsten, a, o and z independently selected from each other represent integers of 1-20, and y is an integer of between 0 and 10.

**6.** Laser-markable molding composition according to at least one of claims 1 to 5, **characterized in that** component C) has an average particle diameter of less than 200 nm.

**7.** Laser-markable molding composition according to at least one of claims 1 to 6, **characterized in that** component C) has a refractive index different than that of component A).

**8.** Laser-markable molding composition according to one or more of claims 1 to 7, **characterized in that** the inorganic oxide is selected from the group of oxides of elements of the 3.-6. period of the III. and IV. main group, the 5.-6. period of the V. main group, the 4.-5. period of the III.-VIII. auxiliary group, and the lanthanides.

**9.** Laser-markable molding composition according to at least one of claims 1 to 8, **characterized in that** the inorganic oxide (C) is selected from the group consisting of AbO$_3$, SiO$_2$, siliceous as well as aiumosiliceous minerals, silicate glasses, TiO$_2$, ZnO, ZrO$_2$, SinO$_2$, Sb$_2$O$_3$, Sb$_2$O$_5$, Bi$_2$O$_3$, and their mixed oxides with further doping elements.

10. Laser-markable molding composition according to claim 9, **characterized in that** said inorganic oxide (C) TiO$_2$ is in anatase and/or rutiiform.

11. Laser-markable molding composition according to at least one of claims 1 to 10, **characterized in that** it contains as an additive at least one sterically hindered phenol together with a phosphorus compound.

12. A method for laser marking of thermoplastic molded parts, comprising the steps of:

   i) preparing a molded part from a molding composition comprising at least one semi-crystalline thermoplast A) and components C) and B) and optionally D) according to claims 1 to 11, and
   ii) irradiating predetermined or at least one surface of the molded part with laser light to cause a change of the optical appearance at the irradiated areas.

13. Molding obtainable by molding a laser-markable molding composition according to one or more of claims 1 to 11

14. Laser-marked molding obtainable by irradiating a molding comprising a laser-markable molding composition according to one or more of claims 1 to 11 with laser light.

15. Use of particulate inorganic oxides C) having an average particle diameter of less than 250 nm, determined by electron or X-ray methods and particulate light-sensitive salt-like compounds B) or mixtures thereof, which change their color or lead to a color change in the plastic material under the influence of laser light, comprising several cations, one of which is selected from the group consisting of Ti, Cr, Mn, Fe, Co, Ni, Zn, Cu, Y, Zr, Nb, Mo, Ag, Sn, Sb, La, Pr, Ta, W, Ce and another one of which is selected from the group consisting of elements of the 3.-6. period of the II. and III. main group, of the 5.-6. period of the IV. main group , as well as of the 4.-5. period of the III. - VIII. auxiliary group of the Periodic Table and the lanthanides, for laser marking of molded parts.

## Revendications

1. Masse moulable marquable au laser, comprenant

   A) au moins un thermoplaste partiellement cristallin et
   C) au moins un oxyde anorganique particulaire d'un diamètre de particule moyen de moins de 250 nm, déterminé par des procédés à faisceau électronique ou à rayons X et
   B) au moins une liaison saline photosensible particulaire qui modifie sa couleur ou entraîne un changement de couleur dans la matière plastique sous l'influence de la lumière laser et qui contient plusieurs cations dont un est sélectionné dans le groupe constitué par Ti, Cr, Mn, Fe, Co, Ni, Cu, Zn, Y, Zr, Nb, Mo, Ag, Sn, Sb, La, Pr, Ta, W, Ce et dont un autre est sélectionné dans le groupe constitué par des éléments de la 3e à 6e période du IIe et IIIe groupe principal, de la 5e à 6e période du IVe groupe principal ainsi que de la 4e à 5e période du IIIe au VIIIe groupe secondaire du système périodique et des lanthanides, et
   D) éventuellement des additifs courants supplémentaires.

2. Masse moulable marquable au laser selon la revendication 1, **caractérisée en ce que** le composé B présente une taille de particule moyenne (d$_{50}$) de moins de 10 μm.

3. Masse moulable marquable au laser selon la revendication 1 ou 2, **caractérisée en ce que** la part de poids du composé A) est de 50 à 99,95 % par rapport à la masse totale de la masse moulable.

4. Masse moulable marquable au laser selon l'une ou plusieurs des revendications 1 à 3, **caractérisée en ce que** le composé A) est sélectionné dans le groupe constitué par les polyacétales, polyesters, polyamides, éthers de polyarylène, sulfures de polyarylène, sulfones de polyéther, polysulfones, cétones de polyaryléther, polyoléfines, polymères cristallins liquides et combinaisons avec un ou plusieurs de ces polymères.

5. Masse moulable marquable au laser selon la revendication 1, **caractérisée en ce que** le composé B) présente des ions de la formule générale A$_a$O$_o$(OH)$_y$$^{2"}$, où A = phosphore trivalent ou pentavalent, soufre tétravalent ou hexavalent, molybdène tétravalent ou tungstène hexavalent, a, o et z représentent indépendamment l'un de l'autre des nombres entiers ayant des valeurs de 1 à 20, et y est un nombre entier ayant des valeurs entre 0 et 10.

**6.** Masse moulable marquable au laser selon au moins l'une des revendications 1 à 5, **caractérisée en ce que** le composé C) présente un diamètre de particule moyen de moins de 200 nm.

**7.** Masse moulable marquable au laser selon au moins l'une des revendications 1 à 6, **caractérisée en ce que** le composé C) présente un indice de réfraction différent du composé A).

**8.** Masse moulable marquable au laser selon l'une ou plusieurs des revendications 1 à 7, **caractérisée en ce que** l'oxyde anorganique est sélectionné dans le groupe des oxydes des éléments de la 3e à 6e période du IIIe et IVe groupe principal, de la 5e à 6e période du Ve groupe principal, de la 4e à 5e période du IIIe au VIIIe groupe secondaire et des lanthanides.

**9.** Masse moulable marquable au laser selon au moins l'une des revendications 1 à 8, **caractérisée en ce que** l'oxyde anorganique (C) est sélectionné dans le groupe constitué par $AbO_3$, $Si\theta_2$, minéraux silicatés et alumosilicatés, verres silicatés, $Ti\theta_2$, $ZnO$, $ZrO_2$, $Sn\theta_2$, $Sb_2O_3$, $Sb_2Os$, $Bi_2O_3$, ainsi que leurs oxydes de mélange avec des éléments dopés supplémentaires.

**10.** Masse moulable marquable au laser selon la revendication 9, **caractérisée en ce que** l'oxyde anorganique (C) est du $TiO_2$ sous forme d'anatase ou de rutile.

**11.** Masse moulable marquable au laser selon au moins l'une des revendications 1 à 10, **caractérisée en ce que** celle-ci contient comme supplément au moins un phénol encombré stériquement allié à une liaison de phosphore.

**12.** Procédé de marquage au laser de pièces moulées thermoplastiques, comportant les étapes :

i) fabrication d'une pièce moulée à partir d'une masse moulable contenant au moins un thermoplaste partiellement cristallin A) et des composés C) et B) et éventuellement D) selon les revendications 1 à 11, et
ii) irradiation de parties prédéterminées d'au moins une surface de la pièce moulée à la lumière laser pour provoquer aux endroits irradiés un changement de l'apparence optique.

**13.** Pièce moulée s'obtenant par mise en forme d'une masse moulable marquable au laser selon l'une ou plusieurs des revendications 1 à 11.

**14.** Pièce moulée marquable au laser s'obtenant par irradiation d'une pièce moulée provenant d'une masse moulable marquable au laser selon l'une ou plusieurs des revendications 1 à 11 à la lumière laser.

**15.** Utilisation d'oxydes anorganiques particulaires (C) d'un diamètre de particule moyen de moins de 250 nm, déterminé par des procédés à faisceau électronique ou à rayons X, et de liaisons salines photosensibles particulaires B) ou de leurs mélanges, qui modifient leur couleur ou entraînent un changement de couleur dans la matière plastique sous l'influence de la lumière laser et qui contiennent plusieurs cations dont un est sélectionné dans le groupe constitué par Ti, Cr, Mn, Fe, Co, Ni, Cu, Zn, Y, Zr, Nb, Mo, Ag, Sn, Sb, La, Pr, Ta, W, Ce et dont un autre est sélectionné dans le groupe constitué par des éléments de la 3e à 6e période du IIe et IIIe groupe principal, de la 5e à 6e période du IVe groupe principal ainsi que de la 4e à 5e période du IIIe au VIIIe groupe secondaire et des lanthanides pour le marquage au laser de pièces moulées.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 190997 A
- EP 330869 A
- EP 400305 A
- EP 542115 A
- US 5063137 A
- EP 797511 A
- US 5489639 A
- EP 764683 A
- EP 808866 A
- WO 9858805 A
- WO 9955773 A
- DE 19905358 A
- WO 0100719 A
- EP 1190988 A
- WO 0178994 A
- DE 10053639 A
- DE 10034472 A
- EP 753536 A
- EP 105451 A
- EP 50265 A

**In der Beschreibung aufgeführte Nicht-Patentliteratur**

- Encyclopedia of Polymer Science and Engineering. John Wiley & Sons, Inc, 1988, vol. 11, 315-489
- **SAECHTLING.** Kunststoff-Taschenbuch. Hanser-Verlag, 517-521